# EUROPEAN PATENT APPLICATION

(11) **EP 4 266 626 A1**
(43) Date of publication of application: **25.10.2023**
(21) Application number: 22168749.4
(22) Date of filing: 19.04.2022
(51) Int. Cl.: H04L 9/40

(54) **METHOD FOR ONBOARDING INDUSTRIAL DEVICES**

(71) Applicant: Siemens Aktiengesellschaft, 80333 München (DE)
(72) Inventor: Palmin, Anna, 76187 Karlsruhe (DE)
(74) Representative: Siemens Patent Attorneys

(57) **Abstract**

The current disclosure describes a method of onboarding a new industrial device in an industrial facility, by a registration authority device. The method comprises receiving an onboarding request from the new industrial device, the onboarding request comprising a device certificate, wherein the device certificate has been certified by a certification authority and wherein the request includes information associated with the certification authority, determining a trust relation profile associated with the new industrial device, based on the information associated with the certification authority; and validating the onboarding request based on the determined trust relation profile.

## Description

### Background:

The current disclosure relates to onboarding of industrial devices and more particularly to authentication of industrial devices during onboarding.

During onboarding of industrial devices, a plurality of secure communication protocols such as HTTPS, OPC UA are utilized. The use of such protocols requires the use of digital certificates. Often, such digital certificates have been validated by the onboarding and registration authority. Such validation of digital certificates is often time consuming and therefore makes the onboarding process relatively slow.

### Description:

The current disclosure relates to onboarding of industrial devices. As mentioned previously, often onboarding of industrial devices is performed securely and accordingly, to ensure security of the onboarding process, digital certificates are utilized to authenticate the industrial device being onboarded. Digital certificates are verified and validated by the onboarding and registration authority to ensure that the industrial device being onboarded is authentic.

As a part of the validating the digital certificate, conventionally the registration authority checks if the certificate is signed, more precisely if the signature in the certificate "matches" the request. Then, the registration authority checks whether the certificate used to sign the certificate in the onboarding request has been issued by a Certification Authority (CA) with which the RA already has a relationship of trust, whereby this check includes the comparison of the higher-level certificates of the associated intermediate or issuing CAs contained in the certificate chain to this certificate contained in the certificate chain for this certificate up to the certificate of the root CA with the certificate chain secured stored as trustworthy, for example in the configuration of the RA and/or in its certificate store or the CA certificates contained in it.

However, the above-mentioned approach is not sufficiently scalable and flexible to accommodate fast onboarding of a multiplicity of industrial devices. According to the conventional approach, even if there is general trust in a manufacturer in the respective system, the registration authority must validate the chain of certificates. This presupposes that the registration authority must have the certificates of all production plants of each manufacturer whose components apply for the certificates via the RA. This means that the manufacturer should make them available to the customer who operates the RA in a suitable (possibly plant-specific/country-specific) manner. Experience has shown that this can be associated with a high level of effort, esp. if the different CAs, i.e., issuing Cas or intermediate CAs (derived from a root CA) of a manufacturer are located in different locations (possibly in different countries). Similarly, if a third-party device (from a trustworthy partner) has to be installed in the plant, which, for example, has a (self-signed) certificate and is not yet stored in the inventory of the RA or in the inventory of the plant, there is no way to include this device in the inventory of the RA so that it can apply for a certificate, because the associated certificate chain is missing. Even if an appropriately authorized user would take responsibility for adding the device to the inventory after a comprehensive review of the device, this would not be supported by the current approach described above.

Accordingly, the current disclosure describes a method and a device which addresses the issues discussed above and provides for a secure, scalable, fast and flexible onboarding of industrial devices.

The current disclosure describes a method of onboarding a new industrial device in an industrial facility, by a registration authority device. The method comprises receiving an onboarding request from the new industrial device, the onboarding request comprising a device certificate, wherein the device certificate has been certified by a certification authority and wherein the request includes information associated with the certification authority, determining a trust relation profile associated with the new industrial device, based on the information associated with the certification authority; and validating the onboarding request based on the determined trust relation profile.

Accordingly, the current disclosure describes a method of onboarding industrial devices wherein the validation is performed based on the determined trust relation profile associated with the certification authority which signed the device certificate. Accordingly, the validation may be customized according to the trust relation profile associated with the certification authority. This allows for flexible validation based on trust relation profile associated with the certification authority. This therefore allows for onboarding of industrial devices to be flexible and scalable with still ensuring security.

In an embodiment, the information associated with the certification authority includes manufacturer information of a first manufacturer and wherein the determined trust relation profile is associated with a plurality of industrial devices from the first manufacturer. Accordingly, this allows for trust to be established at manufacturer level and accordingly, devices from a trusted manufacturer may be subject to a more flexible validation procedure. This allows for faster and flexible onboarding for devices associated with a trusted manufacturer.

In an embodiment, validating the onboarding request comprising determining a need for certification authority validation based on the determined trust relation profile. Accordingly, where the trust relation profile indicates that the certification authority is trusted, further validation may not be required. This allows for faster onboarding. Similarly, where the trust relation profile requires user confirmation, additional user confirmation is requested by the registration authority device to authenticate the new industrial device. This allows for additional security.

In an embodiment, the trust relation profile is generated based on historic onboarding data associated with onboarding of one or more existing industrial devices, where each industrial device from the one or more existing industrial device is associated with the certification authority. Accordingly, trust relation profile is based on historic onboarding data. In an embodiment, historic onboarding data includes information on one or more user actions associated with the onboarding of the one or more existing industrial devices. For example, the trust relation profile is determined using one or more patterns determined using a machine learning algorithm, thereby allowing for automated generation of trust relation profile.

In an embodiment, the request further comprises information associated with a root certification authority and wherein information associated with the root certification authority includes location information associated with the root certification authority. In an embodiment, historic onboarding data includes information on one or more user actions associated with the onboarding of the one or more existing industrial devices. Accordingly trust relation profile may be based on location of the root certificate authority.

In an embodiment, the method further comprises transmitting provisioning data to the new industrial device subsequent to the validation of the new industrial device. Accordingly, the new industrial device utilizes the provisioning data to connect to the corresponding devices and start functioning in the industrial facility.

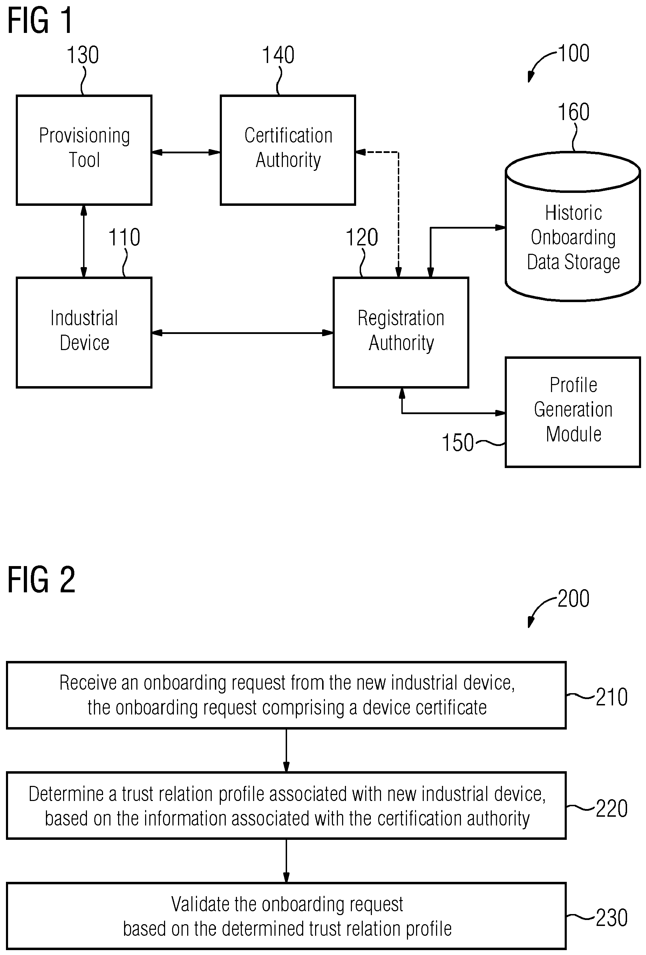

In another aspect, the current disclosure describes a registration authority device for onboarding a new industrial device in an industrial facility. The registration authority device comprises a. one or more processors connected to a memory module. The one or more processors are configured to receive an onboarding request from the new industrial device, the onboarding request comprising a device certificate, wherein the device certificate has been signed by a certification authority and wherein the request includes information associated with the certification authority; determine a trust relation profile associated with the new industrial device, based on the information associated with the certification authority; and validate the onboarding request based on the determined trust relation profile. In yet another aspect, the current disclosure describes a non-transitory storage medium comprising a plurality of instructions, which when executed on one or more processors, cause the one or more processors to receive an onboarding request from the new industrial device, the onboarding request comprising a device certificate, wherein the device certificate has been signed by a certification authority and wherein the request includes information associated with the certification authority; determine a trust relation profile associated with the new industrial device, based on the information associated with the certification authority; and validate the onboarding request based on the determined trust relation profile. The advantages of the method apply to the device and the non-transitory storage medium. These aspects are further explained in reference to figures 1-4.
Figure 1 illustrates an example section of an industrial facility comprises a registration authority device for onboarding one or more industrial devices;
Figure 2 illustrates an example method of onboarding a new industrial device in an industrial facility;
Figure 3 illustrates an example table comprising a plurality of trust relation profiles associated with a plurality of manufacturers; and
Figure 4 illustrates an example registration authority device for onboarding a new industrial device in an industrial facility.

Figure 1 illustrates a section 100 of industrial facility comprising a registration authority 120 for onboarding one or more industrial devices (for example industrial device 110). Industrial facility herein refers to any environment where one or more industrial processes such as manufacturing, refining, smelting, assembly of equipment may take place and includes process plants, oil refineries, automobile factories, warehouses, etc. The industrial facility comprises a plurality of industrial devices and industrial subsystems such as control devices, field devices, operator stations, process historians, etc. Control devices includes process controllers, programmable logic controllers, supervisory controllers, automated guidance vehicles, robots, operator devices, etc. Control devices are connected to a plurality of field devices (not shown in figure) such as actuators and sensor devices for monitoring and controlling industrial processes in the industrial facility. These field devices can include flowmeters, value actuators, temperature sensors, pressure sensors, etc. The control devices may be connected to each other via a control network (realized via wired and wireless networks). Operator stations display the status of the industrial plant to an operator and for allowing the operator to define setpoints for the control of the industrial processes in the facility.

Accordingly, the registration authority 120 (also referred to as registrar) is responsible for onboarding the one or more industrial devices onto the corresponding industrial subsystem. Upon installation of new industrial device 110 in the industrial facility, the new industrial device 110 is configured (via a provisioning tool 130) to contact the registration authority 120 for being onboarded. The registration authority 120 is configured to transmit provisioning data to the new industrial device 110, which is then used by the new industrial device 110 for accessing the devices, applications, and services available in the industrial facility. For example, the provisioning data includes device profile information, network certificates, addresses of application servers, device certificates needed for communicating with the application servers, etc.

As a part of the onboarding process, the registration authority 120 is configured to authenticate whether the new industrial device 110 is a valid industrial device. This is usually performed using one or more certificates associated with the new industrial device 110. This is explained in further in figure 2.

Figure 2 illustrates a method 200 of onboarding a new industrial device 110 in an industrial facility, by a registration authority device 120. It may be noted that while the method 200 is explained in reference to registration authority device 120, the method 200 may be realized by other industrial devices such as controllers, control systems, etc. The method 200 is initiated upon installation or provisioning of a new industrial device 110 in the industrial facility. The method 200 is explained using an example where a new industrial device 110 manufactured by 'manufacturer 2' with the device certificate issued or signed by XYZ issuing certification authority 140, is being installed in the industrial facility. In an example, the device certificate is provided by a machine or system builder or integrator. In an example, the device certificate is issued in accordance with IEEE 802.1AR and is a significant part of an Initial Device Identifier (IDevID) or Locally Significant Device Identifier (LDevID) issued.

Additionally, the device certificate contains the name of the device, a serial number associated with the device and manufacturer information associated with the 'manufacturer 2'. Since the device certificate is signed or issued by the XYZ issuing certification authority 140, the device certificate includes the certificate or signature of the certification authority 140.

At step 210, the registration authority device 120 receives an onboarding request from the new industrial device 110. Upon being installed in the industrial facility, the new industrial device 110 contacts the registration authority device 120 to receive provisioning data. In an embodiment, the new industrial device is configured by a provisioning tool 130 to contact the registration authority device 120. The onboarding request comprises a device certificate associated with the new industrial device 110. In an example, the device certificate is stored in the memory of the new industrial device 110 in a factory site where the new industrial device 110 is manufactured. In another example, the device certificate is provided to the new industrial device 110 by the provisioning tool 130. The device certificate provided by the new industrial device 110 to validate its identity as a valid industrial device. The device certificate has been signed by a certification authority 140 (also referred to as issuing certification authority 140). Additionally, the request includes information associated with the certification authority 140 (i.e., the certificate or signature of the certification authority). Continuing the above example of the new industrial device 110 from manufacturer 2', the registration authority device 120 receives an onboarding request from the new industrial device 110, the onboarding request containing the device certificate signed by the XYZ issuing certification authority 140.

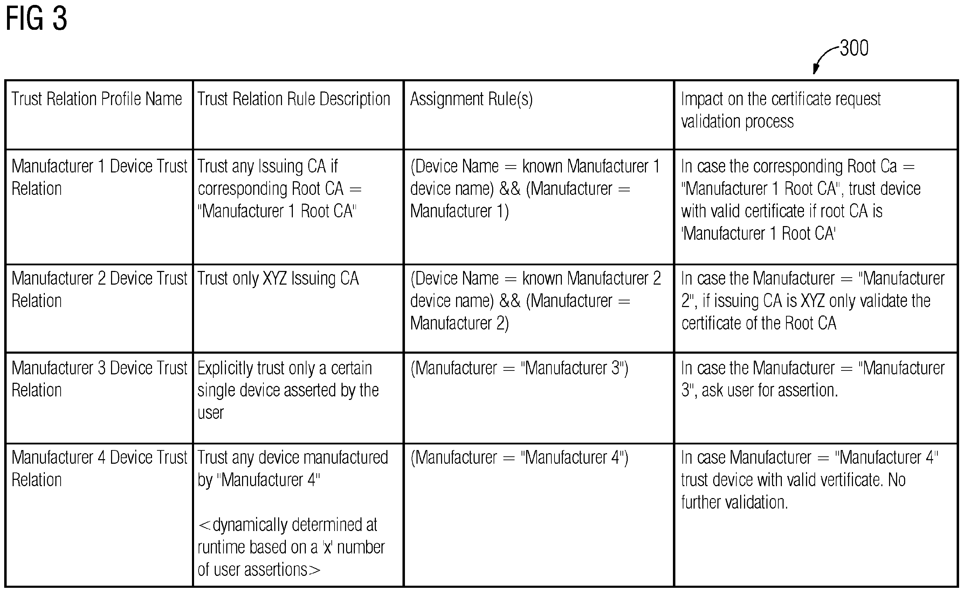

Then, at step 220, the registration authority device 120 determines a trust relation profile associated with the new industrial device 110, based on the information associated with the certification authority 140. The registration authority device 120 includes a plurality of trust relation profiles from which the above-mentioned trust relation profile is determined. Trust relation profile includes one or more actions which are taken by the registration authority device 120 in relation to validation of device certificates based on the information of the certification authorities. Each trust relation profile is associated with a plurality of industrial devices from the corresponding manufacturer. This is further illustrated using an example table 300 containing a plurality of trust relation profiles as shown in figure 3.

Figure 3 illustrates an example table 300 comprising a plurality of trust relation profiles associated with a plurality of manufacturers. As shown in the figure 3, each row of table is associated with a trust relation profile and contains one or more data associated with the trust relation profile in the corresponding columns. The first column contains the name associated with the trust relation profile. The second column contains the description associated with the trust relation profile. The description is provided for the benefit of the user and does not serve any purpose in the implementation of the trust relation profile by the registration authority device. The third column contains the assignment rule based on which the registration authority device determines if the corresponding trust relation profile is applicable. The fourth column contains the instructions to be executed by the registration authority device in relation to the validation procedure.

Continuing the example of the new industrial device from the 'manufacturer 2', based on the device certificate, the registration authority device 120 is able to determine that 'manufacturer 2 device trust relation profile' as the corresponding trust relation profile, which is to be applied in validating the device certificate in relation to the current onboarding request. This is on basis that the information provided in the device certificate meeting the criteria of the rule associated with the 'manufacturer 2 device trust relation profile' (i.e., the name of the device being present in a list of known device names from 'manufacturer 2' and manufacturer name being 'manufacturer 2').

Then, at step 230, the registration authority device 120 validates the onboarding request based on the determined trust relation profile. Accordingly, the validation of the device certification is performed in accordance with the trust relation profile determined in the step 220. Accordingly, validating the onboarding request comprising determining a need for certification authority validation based on the determined trust relation profile. Accordingly, the validation is customized based on the trust relation profile. Continuing the example of the new industrial device 110 from the 'manufacturer 2', the registration authority device 120 determines the 'manufacturer 2 device trust relation profile', the registration authority device 120 validates the device certificate in accordance with the 'manufacturer 2 device trust relation profile'. Accordingly, as mentioned in column 4, the registration authority device 120 only validates the certificate of the root certification authority associated with the device certificate and therefore there is no need for validating the certificate of the issuing certification authority 140 i.e., there is no need to validate the chain of certificates associated with the issuing certification authority 140.

In an example, the registration authority device 120 transmits provisioning data to the new industrial device 110 subsequent to the validation of the new industrial device 110. The new industrial device 110 is configured to utilize the provisioning data as mentioned above to start performing its function in the industrial facility.

Accordingly, the current disclosure describes a method of onboarding industrial devices wherein the validation is performed based on the determined trust relation profile associated with the certification authority which signed the device certificate. Accordingly, the validation may be customized according to the trust relation profile associated with the certification authority. This allows for flexible validation based on trust relation profile associated with the certification authority. This therefore allows for onboarding of industrial devices to be flexible and scalable with still ensuring security.

In an example, trust relation profile may specify validation actions specifically in relation to the root certification authority. For example, the onboarding request further comprises information associated with a root certification authority and wherein information associated with the root certification authority includes location information associated with the root certification authority. Accordingly, validation of the onboarding request may be dependent on the location mentioned in the location information. For example, the onboarding request may be denied if the location information of the root certification authority indicates a value other that an approved value.

In an example, the trust relation profile is generated based on historic onboarding data (stored in a data storage 160) associated with onboarding of one or more existing industrial devices, where each industrial device from the one or more existing industrial device is associated with the certification authority 140. For example, historic onboarding data includes information on one or more user actions associated with the onboarding of the one or more existing industrial devices. When encountering an onboarding request which does not match an existing trust relation profile, the registration authority device 120 may rely on user or operator input to confirm if the device is a valid device and input a custom validation protocol. This user action is recorded along with the onboarding request and the custom validation protocol. Accordingly, when the registration authority device 120 determines that a plurality of onboarding request with a common manufacturer and/or a common certification authority has been approved by the user, the registration authority device 120 is configured to generate a trust relation profile for the manufacturer on the basis of the custom validation protocol. This is further explained in reference to figure 3.

For example, the registration authority device 120 along with a profile generation module 150 is configured to review the historic onboarding data periodically and group onboarding requests according to similarity in manufacturer, issuing certification authority, root certification authority, validation protocol, etc. Based on the grouping, the registration authority device 120 along with the profile generation module 150 determines that a plurality of onboarding request associated with manufacturer 4 have been approved by the user with a custom validation protocol (i.e., no validation to be performed). Accordingly, the registration authority device 120 creates the row 4 for the manufacturer 4.

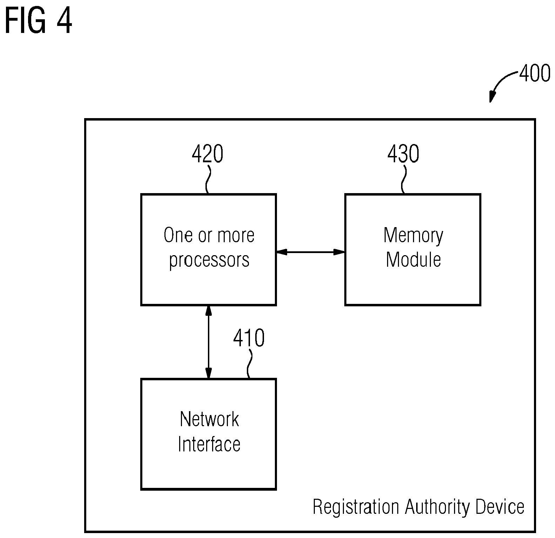

The present disclosure can take a form of a computer program product comprising program modules accessible from computer-usable or computer-readable medium storing program code for use by or in connection with one or more computers, processing units, or instruction execution system. For example, the functionality of the registration authority device may be realized across one or more devices or one or more software services. For example, accordingly, the current disclosure as describes a registration authority device 400 as shown in figure 4.

Figure 4 illustrates an example registration authority device 400. for onboarding a new industrial device in an industrial facility. The registration authority device 400 comprises one or more processors 420 connected to a memory module 430. The memory module 430 (or also referred to as non-transitory storage medium 430) contains a plurality of the instructions which when executed on the one or more processors 420, cause the one or more processors 420 to receive an onboarding request from the new industrial device, the onboarding request comprising a device certificate, wherein the device certificate has been signed by a certification authority and wherein the request includes information associated with the certification authority; determine a trust relation profile associated with the new industrial device, based on the information associated with the certification authority; and validate the onboarding request based on the determined trust relation profile.

For the purpose of this description, a computer-usable or computer-readable non-transitory storage medium can be any apparatus that can contain, store, communicate, propagate, or transport the program for use by or in connection with the instruction execution system, apparatus, or device. The medium can be electronic, magnetic, optical, electromagnetic, infrared, or semiconductor system (or apparatus or device) or a propagation mediums in and of themselves as signal carriers are not included in the definition of physical computer-readable medium include a semiconductor or solid state memory, magnetic tape, a removable computer diskette, random access memory (RAM), a read only memory (ROM), a rigid magnetic disk and optical disk such as compact disk read-only memory (CD-ROM), compact disk read/write, and DVD. Both processing units and program code for implementing each aspect of the technology can be centralized or distributed (or a combination thereof) as known to those skilled in the art.

## Claims

1. A method (200) of onboarding a new industrial device (110) in an industrial facility, by a registration authority device (120), the method (200) comprising:
a. Receiving (210) an onboarding request from the new industrial device (110), the onboarding request comprising a device certificate, wherein the device certificate has been signed by a certification authority (140) and wherein the request includes information associated with the certification authority (140);
b. Determining (220) a trust relation profile associated with the new industrial device (110), based on the information associated with the certification authority (140); and
c. Validating (230) the onboarding request based on the determined trust relation profile.

2. The method (200) as claimed in claim 1, wherein the information associated with the certification authority (140) includes manufacturer information of a first manufacturer and wherein the determined trust relation profile is associated with a plurality of industrial devices from the first manufacturer.

3. The method (200) as claimed in claim 1, wherein validating the onboarding request comprising determining a need for certification authority validation based on the determined trust relation profile.

4. The method (200) as claimed in claim 1, where the trust relation profile is generated based on historic onboarding data associated with onboarding of one or more existing industrial devices, where each industrial device from the one or more existing industrial device is associated with the certification authority (140).

5. The method (200) as claimed in claim 1, wherein the request further comprises information associated with a root certification authority and wherein information associated with the root certification authority includes location information associated with the root certification authority.

6. The method (200) as claimed in claim 1, wherein the method (200) further comprises transmitting provisioning data to the new industrial device (110) subsequent to the validation of the new industrial device (110).

7. The method (200) as claimed in claim 4, wherein historic onboarding data includes information on one or more user actions associated with the onboarding of the one or more existing industrial devices.

8. The method (200) as claimed in claim 5, wherein validating the onboarding request comprising validating the information associated with the root certification authority.

9. A registration authority device (400) for onboarding a new industrial device (110) in an industrial facility, the registration authority device (400) comprising:
a. one or more processors (420) connected to a memory module (430), the one or more processors (420) configured to:
i. receive an onboarding request from the new industrial device (110), the onboarding request comprising a device certificate, wherein the device certificate has been signed by a certification authority (140) and wherein the request includes information associated with the certification authority (140);
ii. determine a trust relation profile associated with the new industrial device (110), based on the information associated with the certification authority (140); and
iii. validate the onboarding request based on the determined trust relation profile.

10. A non-transitory storage medium (430) comprising a plurality of instructions, which when executed on one or more processors (420), cause the one or more processors (420) to:
a. receive an onboarding request from the new industrial device (110), the onboarding request comprising a device certificate, wherein the device certificate has been signed by a certification authority (140) and wherein the request includes information associated with the certification authority (140);
b. determine a trust relation profile associated with the new industrial device (110), based on the information associated with the certification authority (140); and
c. validate the onboarding request based on the determined trust relation profile.
